# EUROPÄISCHE PATENTANMELDUNG

(11) **EP 1 047 014 A2**
(43) Veröffentlichungstag der Anmeldung: **25.10.2000**
(21) Anmeldenummer: 00108375.7
(22) Anmeldetag: 17.04.2000
(51) Int. Cl.: G06K 11/08, G06F 3/00

(54) **Verfahren und Eingabeeinrichtung zum Steuern der Lage eines in einer virtuellen Realität graphisch darzustellenden Objekts**

(30) Priorität: 19.04.1999 DE 19917660
(71) Anmelder: Deutsches Zentrum für Luft- und Raumfahrt e.V, 53127 Bonn (DE)
(72) Erfinder: Arbter, Klaus, Dr., 82290 Landsberied (DE); Landzettel, Klaus, 82269 Geltendorf (DE); Hirzinger, Gerd, Prof. Dr., 82229 Seefeld (DE)
(74) Vertreter: von Kirschbaum, Albrecht, Dipl.-Ing.

(57) **Zusammenfassung**

In einer virtuellen Realität wird auf einer Darstellungseinrichtung (3) einer Graphik-Workstation in dreidimensionaler Ansicht die Lage eines graphisch darzustellenden Objekts (1) über eine Mensch-Maschine-Schnittstelle gesteuert, bei welcher ein Eingabemedium durch die Hand (5) einer Bedienungsperson in jeder beliebigen Raumrichtung verschieb- und verdrehbar ist. Mit einer oder mehreren feststehenden elektronischen Kameras (7) werden ein oder mehrere eindeutige Markierungssymbole (9) bildmäßig aufgenommen, die an einer kamerazugewandten Seite eines als Eingabemedium dienenden materiellen Modellobjekts (6) angeordnet sind, das mit der Hand der Bedienungsperson leicht greifbar ist. Die eindeutigen Markierungssymbole (9) werden mit Methoden der Bildverarbeitung rechnerisch dahingehend ausgewertet, daß die räumliche Lage des Modellobjekts und dessen Erkennen das Ergebnis dieser Auswertung ist.

Das Ergebnis dieser Auswertung wird an eine Graphikeinheit (Graphik-Workstation, PC-Graphik) übertragen. Auf deren Darstellungseinrichtung (3) wird das zugeordnete Objekt in der durch die Hand der Bedienungsperson vorgegebenen Lage des Modellobjekts als virtuelle Realität entsprechend dargestellt. Die Erfindung läßt sich z.B. in der Werbebranche zur Darstellung von Werbeobjekten in gewünschten Positionen verwenden.

## Beschreibung

Die Erfindung betrifft ein Verfahren zum Steuern der Lage eines in einer virtuellen Realität auf einer Darstellungseinrichtung einer Graphikeinheit graphisch darzustellenden Objekts über eine Mensch-Maschine-Schnittstelle, bei der mit einer oder mehreren feststehenden elektronischen Kameras ein oder mehrere an einer kamerazugewandten Seite des Objekts angeordnete eindeutige Markierungssymbole bildmäßig aufgenommen und mit Methoden der Bildverarbeitung rechnerisch dahingehend ausgewertet werden, daß die räumliche Lage des Objekts das Auswertungsergebnis ist, das an die Graphikeinheit übertragen wird, auf deren Darstellungseinrichtung das zugeordnete Objekt in der vorgegebenen Lage des Objekts als virtuelle Realität entsprechend dargestellt wird.

Außerdem betrifft die Erfindung eine Eingabeeinrichtung zur Durchführung des Verfahrens.

In vielen Bereichen der Technik ist die Beeinflussung der räumlichen Lage von Objekten durch den Menschen von Bedeutung. Allerdings fällt dem Menschen die gleichzeitige Steuerung eines solchen Objekts, z.B. eines Baggers, in mehreren Freiheitsgraden ziemlich schwer. Andererseits besteht dafür ein dringender Bedarf, insbesondere in der Computergraphik. Hier möchte der Nutzer simulierte, d.h. virtuelle Objekte in wählbaren Ansichten auf dem Monitor betrachten können, und die gewünschte Ansicht möglichst einfach einstellen bzw. verändern können.

Im äußersten Fall bedeutet dies, daß gleichzeitig drei translatorische und drei rotatorische Freiheitsgrade zu steuern sind. Um den Menschen die Bewältigung dieser Aufgabe zu erleichtern, benötigt er eine bedienerfreundliche Mensch-Maschine-Schnittstelle. Diese soll komplexe Verhaltensmuster des Menschen in Steuersignale für den Computer zerlegen. Dazu eignet sich prinzipiell jedes System, das die Position und Orientierung der menschlichen Hand in und um alle drei Raumrichtungen meßtechnisch erfassen kann.

In diesem Zusammenhang ist eine als "Space Mouse" (eingetragene Marke) bezeichnete Eingabeeinrichtung einer Mensch-Maschine-Schnittstelle bekannt. Hierbei handelt es sich um ein Eingabegerät zum Steuern von drei Rotations- und drei Translationsfreiheitsgraden für 3D-Computergraphik, das eine Kappe hat, die flexibel auf einer Grundplatte angebracht ist und die per Hand in/um eine beliebige Raumrichtung verschoben und verdreht werden kann. Die Auslenkungen werden gemessen und können als Bewegungskommandos interpretiert werden. Dieses Gerät wird heute schon auf breiter Basis in der Computergraphik im Sinne einer Geschwindigkeitssteuerung eingesetzt.

Diese Eingabeeinrichtung erlaubt allerdings nur Auslenkungen von wenigen Millimetern oder Graden. Sie eignet sich daher als Steuergerät für translatorische und rotatorische Geschwindigkeiten, nicht aber für Positionen und Winkel. Die Bedienung ist auf einen engen Arbeitsraum begrenzt und erfordert Einarbeitung und etwas Übung.

Zur Steuerung von Positionen und Orientierungen sind Exoskeletts und Handcontroller entwickelt worden. Exoskeletts und Handcontroller sind äußerst komplexe mechanische Gebilde und kommen daher bei Anwendungen nicht in Betracht, bei denen die Bewegungen der Hand der Bedienungsperson durch mechanische Teile eingeengt werden.

Der sogenannte Datenhandschuh (Data Glove; Power Glove) ist ein Eingabegerät, das bei Anwendungen im Bereich des Cyberspace und der virtuellen Realität eingesetzt wird. Es besteht aus einem Handschuh, der mit Sensoren versehen und über Kabel mit einem Computer verbunden ist. Der Computer ist so programmiert, daß er auf Bewegungen der Finger und des Handgelenks reagiert. Es können damit in einer graphischen Computersimulation (virtuellen Realität) virtuelle Gegenstände von einer virtuellen Hand aufgenommen und manipuliert werden. A1lerdings werden die großen Handbewegungen (Armbewegungen) nicht erfaßt. Daher eignet sich auch der Datenhandschuh nicht zur Lösung des Problems.

Bekannt ist auch der sogenannte Joystick, der hauptsächlich bei Spielen und Simulationen Anwendung findet. Er ist ein kleines, handliches Eingabegerät, das aus einem beweglichen, von der Hand einer Bedienungsperson betätigten Steuerhebel besteht. Der Joystick dient zur Steuerung von Objekten in verschiedenen Richtungen. In der Regel können zwei Freiheitsgrade gesteuert werden, ähnlich wie mit der heute an den neueren Computern angeschlossenen Computer-Maus. Besondere Bauformen erlauben durch Drehung des Griffes die Steuerung eines weiteren Freiheitsgrades. Im allgemeinen reichen die verfügbaren Freiheitsgrade nicht aus. Aber auch in den Anwendungsfällen, in denen sie ausreichen, erfordert die Bedienung des Joystick eine Phase der Gewöhnung, ähnlich wie bei der 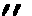 Space Mouse" (eingetragene Marke).

Ferner sind noch Trackingsysteme (Firma Polhemus) bekannt, bei welchen ein Sender ein magnetisches Feld aufbaut und der Empfänger aus dem Magnetfeld seine Position und Orientierung ableitet. Elektromagnetische Tracker liefern zwar die Position sowie die Orientierung und würden sich daher für die Meßaufgabe eignen. Der in der Hand einer Bedienungsperson befindliche Empfänger muß allerdings über ein störendes Kabel oder eine Funkeinrichtung mit der elektronischen Auswerteeinheit verbunden werden. Darüber hinaus wirken sich Eisenteile störend auf das Meßergebnis aus. Schließlich sind diese Systeme sehr kostenaufwendig.

Bei einem aus WO 98/13746 bekannten Interaktivverfahren ist eine Person zusammen mit einem von ihr getragenen Schwert das in einer Graphikeinheit virtuell darzustellende Objekt, das gegen einen ebenfalls virtuell dargestellten Gegner kämpft. Dazu sind zum einen an charakteristischen Stellen (Ellenbogen, Schultern, Knie, Hüftgelenke) des Körpers der Person und zum anderen am Schwert Markierungen angebracht, die der Ortsfestlegung entsprechender Punkte beim Aufbau des virtuellen Bildes dienen.

Die Mensch-Maschine-Schnittstelle bei diesem bekannten Verfahren wird durch mehrere feststehende elektronische Kameras gebildet, die mehrere an einer kamerazugewandten Seite des Objekts, also der Person mitsamt dem Schwert, angeordnete eindeutige Markierungssymbole bildmäßig aufnehmen, die dann mit Methoden der Bildverarbeitung rechnerisch dahingehend ausgewertet werden, daß die räumliche Lage von Person und Schwert das Auswertungsergebnis ist, das an die Graphikeinheit übertragen wird, auf deren Darstellungseinrichtung die zugeordnete Person mit ihrem Schwert dann in der vorgegebenen Lage von Person und Schwert als virtuelle Realität entsprechend dargestellt wird.

Die Person ist somit keine Bedienperson, die ein Schwert als Eingabemedium in der Hand hält. Es handelt sich somit um keine aktiv über die Hand einer Bedienungsperson betriebene Mensch-Maschine-Schnittstelle. Vielmehr wird die von den Kameras beobachtete Person mit dem von ihr in einer Hand geführten Schwert auf der Darstellungseinrichtung der Graphikeinheit als Ganzes virtuell nachgebildet, da die aus WO 98/13746 bekannte Einrichtung dazu dienen soll, in einem rechnergesteuerten Spiel oder einer rechnergesteuerten Übung ein Gefecht mit einem ebenfalls virtuell dargestellten Gegner zu führen.

Aus EP 0 813 040 A2 ist ein System zum virtuellen Modellieren eines körperlichen Systems mit beweglichen und unbeweglichen Gegenständen bekannt. Hierbei werden wenigstens zwei Videokameras verwendet, die der Erfassung von Kennungssymbolen von Objekten dienen. Diese erfaßten Kennungssymbole werden den auf einem Monitor dargestellten Gegenständen zugeordnet, so daß sich eine modellierte virtuelle Realität des körperlichen Systems auf dem Bildschirm ergibt. Ein Eingeben von Lageinformationen mit Hilfe eines von einer Bedienerhand geführten Eingabemediums ist hierbei allerdings nicht vorgesehen.

Aus WO 98/00774 ist eine besondere Realisierungsform einer mit einem optischen Detektor, z.B. einer Videokamera, ausgerüsteten Scannerplattform bekannt, die Kennzeichnungen an körperlichen Objekten, also z.B. von Waren, erkennen soll, die in einem ersten Bereich über eine als räumliches Referenzglied dienende Glasplatte von Hand geführt werden. Von der Videokamera, die in einem zweiten Bereich, nämlich unter der das räumliche Referenzglied bildenden Glasplatte angeordnet ist, werden die optischen Kennzeichnungen der über die Glasplatte geführten Objekte verfolgt, signalmäßig erfaßt und einem Computer als Eingabesignale zur Auswertung und späteren Darstellung auf einem Bildschirm eingegeben. Die Verfolgung des Objekts erfolgt nur in drei Freiheitsgraden, nämlich hinsichtlich der Position in der Ebene des Referenzgliedes und der Orientierung um die Vertikale.

Der Erfindung liegt die Aufgabe zugrunde, ein Verfahren und eine Eingabeeinrichtung zum Steuern der Lage eines in einer virtuellen Realität graphisch darzustellenden Objekts zu schaffen, wobei unter Ausnutzung einer Beobachtung von Markierungen des virtuell darzustellenden Objekts durch elektronische Kameras eine Lagesteuerung des virtuell dargestellten Objekts von Hand ermöglicht wird, dabei die Bewegung der Hand der Bedienungsperson durch nichts, also weder durch mechanische Teile noch durch Kabel, eingeengt wird und die Benutzung möglichst intuitiv erfolgt.

Gemäß der Erfindung, die sich auf ein Verfahren der eingangs genannten Art bezieht, wird diese Aufgabe dadurch gelöst, daß die räumliche Lage des virtuell darzustellenden Objekts mittels eines Eingabemediums der Mensch-Maschine-Schnittstelle gesteuert wird, das aktiv durch die Hand einer Bedienungsperson verschiebbar und verdrehbar ist und das durch ein mit einer Hand der Bedienperson leicht greifbares, materielles und mit den Markierungssymbolen versehenes Modellobjekt des darzustellenden Objekts gebildet wird.

Das Verfahren nach der Erfindung zeichnet sich dadurch aus, daß es jeder Bedienungsperson auf Anhieb, d.h. ohne jegliche Übung, gelingt, die gewünschte Ansicht einzustellen und zu verändern. Durch den unmittelbaren räumlichen Bezug zwischen dem das Eingabemedium bildenden materiellen Modellobjekt und dem simulierten computergraphischen Modell assoziiert der Benutzer sofort die richtige Verwendung des Systems und kann es bedienen, ohne vorher geübt zu haben.

Die Beweglichkeit der Hand des das Eingabemedlum bedienenden Nutzers wird weder durch mechanische Komponenten noch durch elektrische Leitungen behindert. Das mit den Markierungssymbolen versehene Modellobjekt ist vollständig passiv und benötigt weder Energie noch irgendwelche Einbauten.

Eine vorteilhafte Weiterbildung des Verfahrens nach der Erfindung besteht darin, daß die am Modellobjekt angeordneten Markierungssymbole auch eine Kennung des jeweils als virtuelle Realität darzustellenden Objekts beinhalten, die ebenfalls mit der/den Kamera/s bildmäßig aufgenommen und mit Methoden der Bildverarbeitung ausgewertet werden, so daß sich mit verschiedenen Markierungssymbolen versehene Modellobjekte unterscheiden und ihre individuellen Lagen angeben lassen, und daß auch das Ergebnis dieser Auswertung an eine Graphikeinheit (Graphik-Workstation, PC-Graphik) übertragen wird, auf deren Darstellungseinrichtung jeweils über ihre Kennung erkannte und dadurch zugeordnete Objekt in der durch die Hand der Bedienungsperson vorgegebenen Lage des jeweiligen Modellobjekts als virtuelle Realität dargestellt werden.

Eine Eingabeeinrichtung zur Durchführung des Verfahrens nach der Erfindung zeichnet sich dadurch aus, daß die Markierungssymbole auf der der Kamera bzw. den Kameras zugewandten Unterseite des Modellobjekts angebracht sind.

In vorteilhafter Weise sind die auf der Unterseite des Modellobjekts angebrachten Markierungssymbole eben ausgebildet. Die auf der Unterseite des Modellobjekts angebrachten ebenen Markierungssymbole können dabei Buchstaben, Zahlen und/oder abstrakte Symbole sein, die zur besseren Unterscheidbarkeit und Erkennbarkeit auch in Farbe oder reflektierend ausgeführt sein können.

Die die Kennung des Objekts betreffenden Symbole lassen sich z.B. auch in Form eines Strichcodes ausbilden. Die erforderlichen Markierungssymbole sind leicht herzustellen, leicht anzubringen und sind für den Anwender unsichtbar, da sie sich an der Unterseite des Modellobjekts befinden.

Unterschiedlich ausgebildete Markierungssymbole lassen sich auf der Unterseite eines Modells anbringen, so daß sich mit einem einzigen Modellobjekt durch Anbringen sich unterscheidender Kennungssymbole unterschiedliche Objekte der virtuellen Realität aktivieren lassen.

Bei einer zweckmäßig ausgeführten Eingabeeinrichtung nach der Erfindung befindet/n sich die Kamera bzw. die Kameras unterhalb einer optisch durchlässigen Scheibe, oberhalb welcher das Modellobjekt mit seiner Unterseite in der/den Kamera/s zugewandter Position von einer Hand der Bedienungsperson gehalten wird. Die Scheibe besteht vorteilhaft aus Glas oder Plexiglas (eingetragene Marke) mit einer oder mehreren der nachfolgenden Eigenschaften, wie durchsichtig oder durchscheinend, klar oder matt, farblos oder farbig, entspiegelt oder nicht entspiegelt.

Als Kamera kann bei einer Eingabeeinrichtung nach der Erfindung eine elektronische Kamera (z.B. Videokamera, CCD-Kamera) mit einer zur elektronischen Bildübertragung an einen Digitalrechner geeigneten Schnittstelle vorgesehen sein.

Zur die Lage der Markierungssymbole und damit des Modellobjekts sowie die Kennungssymbole des Modellobjekts betreffenden Bildauswertung kann ein Personal Computer eingesetzt werden. Die Realisierung einer Eingabeeinrichtung zur Durchführung des Verfahrens nach der Erfindung ist also mit Komponenten aus dem Massenmarkt kostengünstig möglich.

Insbesondere in der Werbebranche sind zur Darstellung von Werbeobjekten in gewünschten Positionen das Verfahren und die Eingabeeinrichtung nach der Erfindung besonders vorteilhaft verwendbar. Als ein einsichtiges Beispiel sei an dieser Stelle beispielsweise die Idee eines "virtuellen Autosalons" skizziert. Sämtliche Autotypen eines Anbieters sind hier in unterschiedlichen Ausführungen als Computergraphiken gespeichert und können auf einem Monitor oder einer Projektionsleinwand dargestellt werden.

Das Verfahren nach der Erfindung eröffnet in besonders vorteilhafter Weise jedem, also Verkäufer, Vorstand oder Kunden, die Möglichkeit, auf Anhieb, d.h. ohne jegliche Übung, die gewünschte Ansicht eines ausgewählten Autotyps einzustellen und zu variieren.

In einem solchen, mit den Merkmalen der Erfindung ausgestatteten Ausführungsbeispiel eines "virtuellen Autosalons" befinden sich unterhalb einer optisch durchlässigen Scheibe eine oder mehrere elektronische Kameras. Bei Verwenden von nur einer Kamera ist die optische Achse vorzugsweise senkrecht zur Scheibe orientiert. Bei Verwenden von mindestens zwei Kameras können deren optische Achsen ebenfalls senkrecht orientiert sein. (Dies ist die klassische Stereoanordnung mit parallel orientierten Achsen) . Vorteilhaft ist jedoch eine Anordnung, bei welcher die optischen Achsen schräg zur optisch durchlässigen Scheibe orientiert sind und zwei senkrecht zueinander stehenden Vertikalebenen liegen. Diese Anordnung eignet sich aus physikalischen Gründen besser als die klassische Stereoanordnung zur Bestimmung der Kippwinkel (d.h. der Schräglagen des Objektes).

Als Eingabemedium dient ein leicht greifbares Modellobjekt, z.B. ein kleines Modellauto im Maßstab 1:25, in der Hand einer Bedienungsperson. Das Modellobjekt ist auf seiner Unterseite, die der bzw. den Kameras zugewandt ist, mit einem oder mehreren ebenen Markierungssymbolen, wie Buchstaben, Zahlen oder abstrakten Symbolen, zu Markierungs- und Kennungszwecken versehen.

Die Kamerabilder dieser Markierungssymbole werden mit Methoden der Bildverarbeitung rechnerisch ausgewertet. Das Ergebnis dieser Auswertung ist sowohl eine Kennung des Modellobjekts sowie dessen räumliche Lage. Auf diese Weise können mehrere gleichzeitig im Kamerabild bzw. in den Kamerabildern erscheinende Objekte unterschieden und ihre individuellen Lagen angegeben werden.

Diese Ergebnisse werden an eine Graphikeinheit (Graphik-Workstation, PC-Graphik) übertragen, auf deren Darstellungseinrichtung die zugeordneten Objekte, z.B. ein, zwei oder mehr Autos unterschiedlichen Fabrikats, in den von der Bedienungsperson vorgegebenen Lagen dargestellt werden. In vorteilhafter Weise werden an der Unterseite des Modellobjekts farbige ebene Markierungssymbole angebracht. Diese lassen sich mit einfachen Mitteln wiederfinden (segmentieren) . In diesem Fall muß die Beleuchtung alle Farbkomponenten beinhalten (beispielsweise sichtbares weißes Licht) . Soll die Beleuchtung unsichtbar bleiben (beispielsweise in Räumen, die zur brillanteren Barstellung der Computergrafik abgedunkelt werden), dann ist die Verwendung von infrarotem Licht und retroreflektierenden Markierungssymbolen vorteilhaft.

Anschließend erfolgt sowohl die Modellobjekterkennung als auch die Lagebestimmung des Modellobjekts durch Separation von Gestaltsparametern und Lageparametern aus dem Konturverlauf der Markierungssymbole. Die Verwendung des Verfahrens nach der Erfindung ist als besonders vorteilhaft zu erachten, weil für beide Teilaufgaben, nämlich die Erkennung und die Lokalisierung, nur ein ebenes Markierungssymbol benötigt wird, weswegen die verfügbare Fläche gut ausgenutzt werden kann, und weil der Rechenaufwand gering ist.

Neben anderen Alternativen könnten beispielsweise ein Strichcode (Barcode) für die Erkennung und zusätzlich einige einfache, z.B. runde, farbige oder reflektierende Marken für die Lagebestimmung mit klassischen Methoden der Photogrammetrie verwendet werden.

Die Erfindung wird nachfolgend anhand von vorteilhaften Ausführungsbeispielen mittels Zeichnungen erläutert. Es zeigen:
- Fig. 1: die schematische Darstellung einer ersten Eingabeeinrichtung zur Durchführung des Verfahrens nach der Erfindung,
- Fig.2: die schematische Darstellung einer zweiten Eingabeeinrichtung zur Durchführung des Verfahrens nach der Erfindung, und
- Fig.3: drei Beispiele (a), (b) und (c) für auf einem Modellobjekt anbringbare Markierungssymbole.

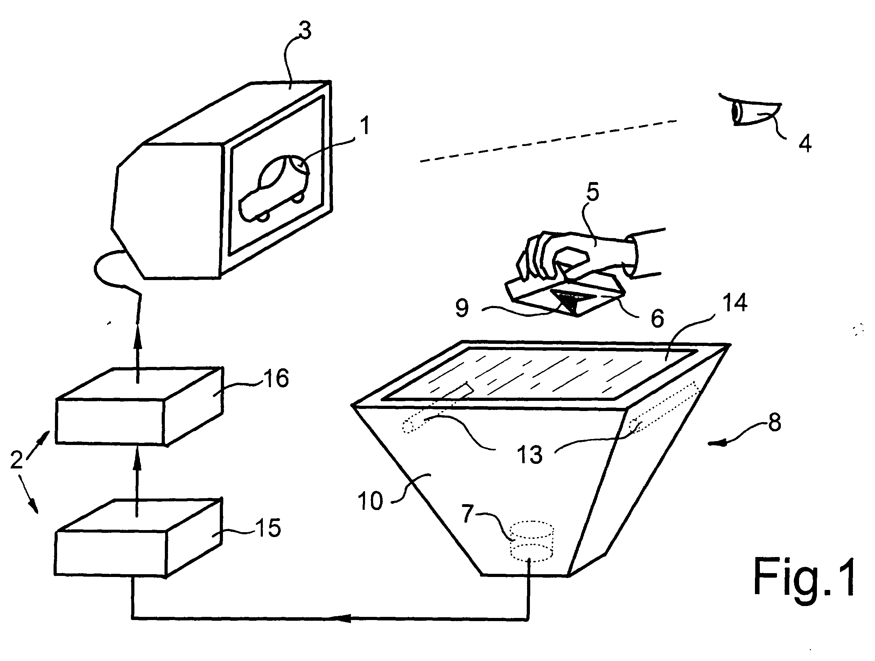

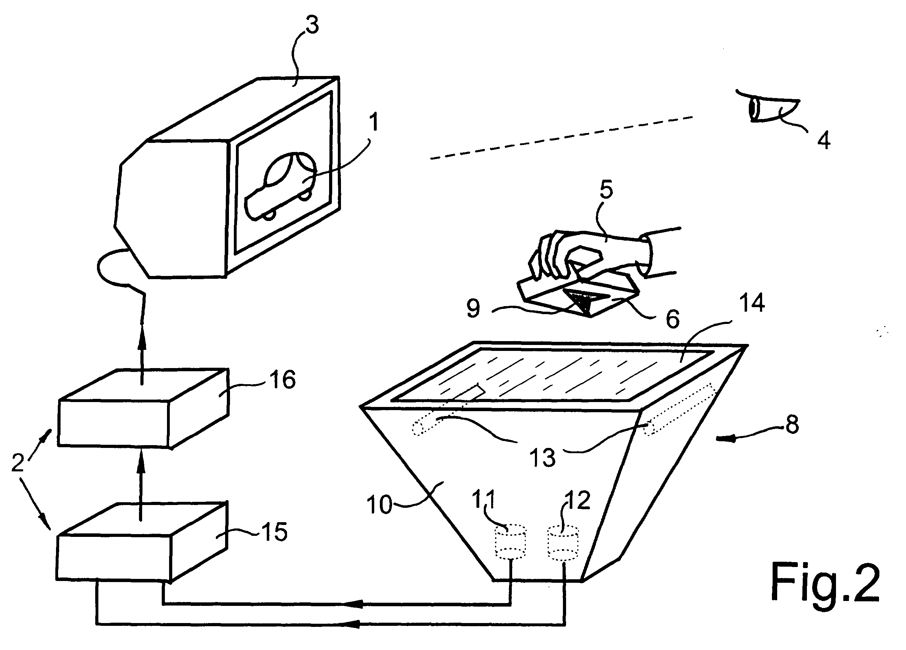

Mit den beiden in Fig. 1 bzw. Fig.2 gezeigten Einrichtungen soll in einer virtuellen Realität die Lage eines Objekts 1 auf einer über einen Computer 2 angesteuerten Darstellungseinrichtung 3 graphisch dargestellt werden. Das Auge 4 eines Benutzers betrachtet das virtuell dargestellte Objekt 1 auf der Darstellungseinrichtung 3. In einer Hand 5 hält der Benutzer ein physikalisches Modellobjekt 6 in einer gewünschten Lage und Orientierung.

Das Modellobjekt 6 ist ein tragbarer, leicht greifbarer Gegenstand, z.B. wie in Fig.1 und Fig.2 ein Klotz oder aber ein gegenständliches Modell des virtuell darzustellenden Objekts 1. Das von einer elektronischen Kamera 7 (Fig.1) bzw. zwei elektronischen Kameras 11 und 12 (Fig.2) einer nachfolgend noch im einzelnen beschriebenen Bedienkonsole 8 beobachtete Modellobjekt 6 weist auf seiner Unterseite ein Markierungssymbol 9 auf, das aus einem Material besteht, welches sich im Kamerabild von der Umgebung deutlich abhebt, z.B. durch seine Farbe/n oder durch sein Reflexionsverhalten. Darüber hinaus befindet sich das Markierungssymbol 9 in einer Anordnung, die sich zum einen zur Bestimmung der räumlichen Objektlage aus dem Kamerabild und die sich zum anderen auch zur Unterscheidung verschiedener darzustellender Objekte 1, also zur Identifizierung, eignet.

Die bereits erwähnte Bedienkonsole 8 weist ein Gehäuse 10 auf, das im Falle des Ausführungsbeispiels der Fig.1 eine elektronische Kamera 7 bzw. im Falle des Ausführungsbeispiels der Fig.2 zwei elektronische Kameras 11 und 12, eine Beleuchtungseinrichtung 13 und eine optisch durchlässige Scheibe 14 an seiner Oberseite trägt. Die elektronische Kamera 7 bzw. die beiden elektronischen Kameras 11 und 12 dienen zur Bildaufnahme des Markierungssymbols 9 in Mono- bzw. Stereoskopie. Im Fall der Stereoskopie mit zwei Kameras können die optischen Kameras mit paralleler Orientierung der optischen Achsen angeordnet sein, wie in Fig.2 dargestellt, oder aber auch vorteilhaft mit gegeneinander geneigten Orientierungen. Die Beleuchtungseinrichtung 13 dient zur Kontrastverstärkung, wobei z.B. multispektrales (weißes), infrarotes oder ultraviolettes Licht vorgesehen werden kann.

Auf der optisch durchlässigen Scheibe 14 kann das physikalische Modellobjekt 6 im Erfassungsbereich der elektronischen Kamera 7 bzw. Kameras 11 und 12 abgelegt werden, so daß es auf der Oberfläche der Scheibe 14 mit der Hand 5 des Benutzers in denjenigen Fällen bequem geführt werden kann, in denen nur die drei Freiheitsgrade der Bewegung auf der Scheibe 14 gesteuert werden sollen, d.h. Verschiebung auf der Scheibe 14 und Verdrehung um eine auf der Scheibenebene senkrecht stehende Hochachse. Die Scheibe 14 dient auch zur Kontrastverstärkung, also zur Filterung, bei farbiger Beleuchtung. Beispielsweise kann durch eine rotdurchsichtige Scheibe 14 oder eine als Infrarot-Filter ausgebildete Scheibe 14 bei Infrarotbeleuchtung der Kontrast verstärkt werden.

Der Computer 2 in der in Fig.1 bzw. Fig.2 gezeigten Einrichtung zur Darstellung eines Objekts 1 in einer virtuellen Realität in gewünschter Lage setzt sich aus einer Einrichtung 15 zur Bildverarbeitung und einer Computer-Graphikeinrichtung 16 zusammen. Die Einrichtung 15 zur Bildverarbeitung enthält Mittel zur Aufnahme der Bilder, Segmentierungsmittel zur Trennung des Bildes des Markierungssymbols 9 von allen übrigen Bildteilen, Mittel zur Objektidentifizierung durch Auswertung der Farbe, Form oder eines Codes und Mittel zur Rückrechnung auf die räumliche Objektlage aus dem Kamerabild (Fig.1) bzw. den Kamerabildern (Fig.2) der Markierungssymbole 9. Die Computer-Graphikeinrichtung 16 enthält Mittel zur Speicherung virtueller 3D-Objekte und Mittel zur Berechnung der Ansichten virtuell darzustellender Objekte 1 in Abhängigkeit von der jeweiligen Betrachterposition (monoskopisch/stereoskopisch).

In der über den Computer 2 angesteuerten Darstellungseinrichtung 3 erfolgt dann eine Darstellung des virtuell abzubildenden Objekts 1 (monoskopisch/stereoskopisch) entsprechend der Ansicht, die durch den Benutzer unter Verwendung des physikalischen Modellobjekts 6 vorgegeben wird.

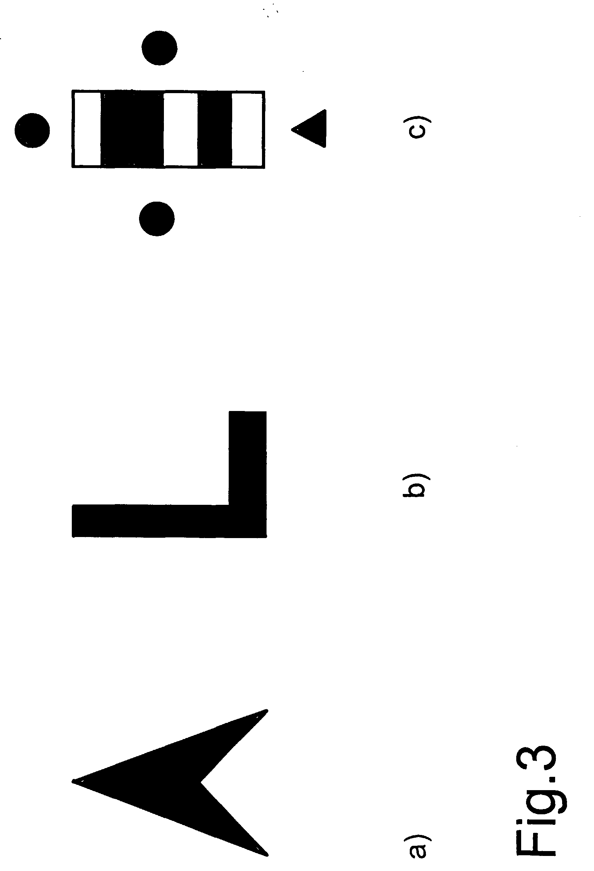

In Fig.3 sind drei Beispiele (a), (b) und (c) für auf dem physikalischen Modellobjekt 6 (Fig.1 und Fig.2) an dessen Unterseite anbringbare Markierungssymbole dargestellt, die sich alle drei zur Bestimmung der räumlichen Objektlage aus dem Kamerabild und zusätzlich zugleich zur Unterscheidung verschiedener virtuell darzustellender Objekte eignen. Die beiden Markierungssymbole (a) und (b) sind allein aufgrund ihres Konturverlaufs, auch unter perspektivischer Verzeichnung, unterscheidbar. Die Eckpunkte können als Fixpunkte für die Lagebestimmung des physikalischen Modellobjekts verwendet werden.

Das in Fig.3 dargestellte Markierungssymbol (c) ist demgegenüber etwas komplexer strukturiert, hat sich jedoch als sehr robust erwiesen. Vier Marken, die im Beispiel durch drei Kreisflächen und eine Dreiecksfläche gebildet werden, dienen als Fixpunkte zur Lagebestimmung. Um Mehrdeutigkeiten (modulo 180°) auszuschließen, werden als Marken verschiedene Konturen, im dargestellten Beispiel also Kreise und ein Dreieck, verwendet. Die Kennung erfolgt durch einen Binärcode in einem Strichcode-Balken. Im dargestellten Beispiel des Markierungssymbols (c) zeigt das Dreieck auf das höchstwertige Bit des Strichcode-Balkens und die Kennung hat den Wert 010110 (binär) gleich 22 (dezimal).

### Bezugszeichenliste

- 1: Virtuell dargestelltes Objekt
- 2: Computer
- 3: Darstellungseinrichtung
- 4: Auge eines Benutzers
- 5: Hand eines Benutzers
- 6: Modellobjekt
- 7: Kamera
- 8: Bedienkonsole
- 9: Markierungssymbol
- 10: Gehäuse
- 11, 12: Kameras
- 13: Beleuchtungseinrichtung
- 14: Optisch durchlässige Scheibe
- 15: Einrichtung zur Bildverarbeitung
- 16: Computer-Graphikeinrichtung

## Patentansprüche

1. Verfahren zum Steuern der Lage eines in einer virtuellen Realität auf einer Darstellungseinrichtung einer Graphikeinheit graphisch darzustellenden Objekts über eine Mensch-Maschine-Schnittstelle, bei der mit einer oder mehreren feststehenden elektronischen Kameras ein oder mehrere an einer kamerazugewandten Seite des Objekts angeordnete eindeutige Markierungssymbole bildmäßig aufgenommen und mit Methoden der Bildverarbeitung rechnerisch dahingehend ausgewertet werden, daß die räumliche Lage des Objekts das Auswertungsergebnis ist, das an die Graphikeinheit übertragen wird, auf deren Darstellungseinrichtung das zugeordnete Objekt in der vorgegebenen Lage des Objekts als virtuelle Realität entsprechend dargestellt wird, **dadurch gekennzeichnet,** daß die räumliche Lage des virtuell darzustellenden Objekts (1) mittels eines Eingabemediums der Mensch-Maschine-Schnittstelle gesteuert wird, das aktiv durch die Hand (5) einer Bedienungsperson in allen sechs Freiheitsgraaden verschiebbar und verdrehbar ist und das durch ein mit einer Hand der Bedienperson leicht greifbares, materielles und mit dem/den Markierungssymbol/en (9) versehenes Modellobjekt (6) des darzustellenden Objekts gebildet wird.

2. Verfahren nach Anspruch 1, **dadurch gekennzeichnet,** daß die am Modellobjekt (6) angeordneten Markierungssymbole (9) auch eine Kennung des jeweils als virtuelle Realität darzustellenden Objekts (1) beinhalten, die ebenfalls mit der/den Kamera/s (7; 11, 12) bildmnäßig aufgenommen und mit Methoden der Bildverarbeitung ausgewertet werden, so daß sich mit verschiedenen Markierungssymbolen versehene Modellobjekte unterscheiden und ihre individuellen Lagen angeben lassen, und daß auch das Ergebnis dieser Auswertung an die Graphikeinheit (Graphik-Workstation, PC-Graphik) übertragen wird, auf deren Darstellungseinrichtung (3) jeweils über ihre Kennung erkannte und dadurch zugeordnete Objekt in der durch die Hand (2) der Bedienungsperson vorgegebenen Lage des jeweiligen Modellobjekts (6) als virtuelle Realität dargestellt werden.

3. Eingabeeinrichtung zur Durchführung des Verfahrens nach Anspruch 1 oder 2, **dadurch gekennzeichnet,** daß die Markierungssymbole (9) auf der der Kamera (7) bzw. den Kameras (11, 12) zugewandten Unterseite des Modellobjekts (6) angebracht sind.

4. Eingabeeinrichtung nach Anspruch 3, **dadurch gekennzeichnet,** daß die auf der Unterseite des Modellobjekts (6) angebrachten Markierungssymbole (6) eben ausgebildet sind.

5. Eingabeeinrichtung nach Anspruch 4, **dadurch gekennzeichnet,** daß die auf der Unterseite des Modellobjekts (6) angebrachten ebenen Markierungssymbole (9) Buchstaben, Zahlen und/oder abstrakte Symbole sind.

6. Eingabeeinrichtung nach Anspruch 5, **dadurch gekennzeichnet,** daß die Markierungssymbole (9) farbig sind.

7. Eingabeeinrichtung nach Anspruch 5 oder 6, **dadurch gekennzeichnet,** daß die Markierungssymbole (9) reflektierend sind.

8. Eingabeeinrichtung nach einem der Ansprüche 5 bis 7, **dadurch gekennzeichnet,** daß die die Nennung des Objekts betreffenden Markierungssymbole oder Symbolteile in Form eines Strichcodes ausgebildet sind.

9. Eingabeeinrichtung nach einem der Ansprüche 5 bis 8, **dadurch gekennzeichnet,** daß die unterschiedlich ausgerichteten Markierungssymbole (9) auf der Unterseite des Modellobjekts (6) anbringbar sind, so daß sich mit einem einzigen Modellobjekt durch Anbringen sich unterscheidender Kennungssymbole unterschiedliche Objekte (1) der virtuellen Realität aktivieren lassen.

10. Eingabeeinrichtung nach einem der Ansprüche 3 bis 9, **dadurch gekennzeichnet,** daß sich die Kamera (7) bzw. die Kameras (11, 12) unterhalb einer optisch durchlässigen Scheibe (14) befinden, oberhalb welcher das Modellobjekt (6) mit seiner Unterseite in der/den Kamera/s (7; 11, 12) zugewandter Position von einer Hand (5) der Bedienungsperson gehalten wird, wobei die Scheibe aus Glas oder Plexiglas (eingetragene Marke) mit einer oder mehreren der nachfolgenden Eigenschaften, wie durchsichtig oder durchscheinend, klar oder matt, farblos oder farbig, entspiegelt oder nicht entspiegelt, besteht .

11. Eingabeeinrichtung nach Anspruch 10, **dadurch gekennzeichnet,** daß zwei Kameras (11, 12) vorgesehen sind, deren optische Achsen gegeneinander geneigt und schräg zur optisch durchlässigen Scheibe (14) orientiert sind und in zwei senkrecht zueinander stehenden vertikalen Ebenen liegen.

12. Eingabeeinrichtung nach einem der Ansprüche 3 bis 11, **daqurch gekennzeichnet,** daß als Kamera (7; 11, 12) eine elektronische Kamera mit einer zur elektronischen Bildübertragung an einen Digitalrechner geeigneten Schnittstelle vorgesehen ist.

13. Eingabeeinrichtung nach Anspruch 10 oder 12, **dadurch gekennzeichnet,** daß die elektronische/n Kamera/s (7; 11, 12) in einem Gehäuse (10) einer Bedienkonsole (8) untergebracht ist/sind, das außerdem noch eine Beleuchtungseinrichtung (13) und die optisch durchlässige Scheibe (14) an seiner Oberseite enthält.

14. Eingabeeinrichtung nach Anspruch 13, **dadurch gekennzeichnet,** daß die Beleuchtungseinrichtung (13) zur Kontrastverstärkung beispielsweise multispektrales (weißes), infrarotes oder ultraviolettes Licht ausstrahlt.

15. Eingabeeinrichtung nach Anspruch 13, **dadurch gekennzeichnet,** daß die Scheibe (14) zur Ablage des Modellobjekts (6) im Erfassungsbereich der Kamera/s (7; 11, 12) und zur bequemen Führung des Modellobjekts ausgelegt ist, wenn nur drei Freiheitsgrade der Bewegung auf der Scheibe gesteuert werden sollen, nämlich die translatorische Verschiebung auf der Scheibe und die Verdrehung um die auf der Scheibe senkrecht stehende Hochachse.

16. Eingabeeinrichtung nach Anspruch 13 und 14, **dadurch gekennzeichnet,** daß die Scheibe (14) zur Kontrastverstärkung, d.h. zur Filterung, bei farbiger Beleuchtung ausgelegt ist.

17. Eingabeeinrichtung nach Anspruch 16, **dadurch gekennzeichnet,** daß die Scheibe (14) rotdurchsichtig ist oder als Infrarot-Filter ausgelegt ist und die Beleuchtung eine Infrarot-Beleuchtung ist.

18. Eingabeeinrichtung nach einem der Ansprüche 3 bis 17, **dadurch gekennzeichnet,** daß zur die Lage der Markierungssymbole (9) und damit des Modellobjekts (6) sowie die Kennungssymbole des Modellobjekts betreffenden Bildauswertung ein Computer (2), insbesondere ein Personal Computer, eingesetzt ist.

19. Eingabeeinrichtung nach Anspruch 18, **dadurch gekennzeichnet,** daß der Computer (2) eine Einrichtung (15) zur Bildverarbeitung und eine Computer-Graphikeinrichtung (16) aufweist, daß die Einrichtung (15) zur Bildverarbeitung Mittel zur Aufnahme der Bilder, Segmentierungsmittel zur Trennung des Bildes des Markierungssymbols (9) von allen übrigen Bildteilen, Mittel zur Objektidentifizierung durch Auswertung der Farbe, Form oder eines Codes und Mittel zur Rückrechnung auf die räumliche Objektlage aus dem Kamerabild bzw. den Kamerabildern der Markierungssymbole (9) enthält und daß die ComputerGraphikeinrichtung (16) Mittel zur Speicherung virtueller 3D-Objekte und Mittel zur Berechnung der Ansichten virtuell darzustellender Objekte (1) in Abhängigkeit von der jeweiligen Betrachterposition enthält.

20. verwendung des Verfahrens nach Anspruch 1 oder 2 und der Eingabeeinrichtung nach einem der Ansprüche 3 bis 19 in der Werbebranche zur Darstellung von Werbeobjekten in gewünschten Positionen.
